# EUROPEAN PATENT APPLICATION

(11) **EP 3 165 343 A1**
(43) Date of publication of application: **10.05.2017**
(21) Application number: 15806944.3
(22) Date of filing: 01.06.2015
(51) Int. Cl.: B29C 43/34, B29B 7/90, B29K 105/12

(54) **COMPOSITE MATERIAL PRESS MOLDING SYSTEM AND KNEADER/EXTRUDER USING SAME**

(30) Priority: 09.06.2014 JP 2014118925
(71) Applicant: Toyo Machinery & Metal Co. Ltd., Akashi-shi, Hyogo 674-0091 (JP); Ibaraki Industrial Corporation, Ibaraki City Osaka 567-0847 (JP)
(72) Inventor: INOUE, Akira, Akashi-shi Hyogo 6740091 (JP); OKAZAKI, Masanori, Akashi-shi Hyogo 6740091 (JP); TOYODOME, Nagahisa, Ibaraki city Osaka 5670847 (JP); HACHIMURE, Takeshi, Ibaraki city Osaka 5670847 (JP)
(74) Representative: V.O.
(86) International application number: PCT/JP2015/065791
(87) International publication number: WO 2015/190340

(57) **Abstract**

The present invention provides a kneader/extruder including: a heating cylinder (16); a screw (17) that is housed in the heating cylinder (16) so as to be capable of rotation and forward/backward movement; and a die (18) that is attached to a tip of the heating cylinder (16) so that the kneader/extruder can generate a plastic compound (6) having a reinforcement fiber kneaded therein; wherein: the kneader/extruder further includes a shutter member (19) that opens and closes a compound extrusion port (18a) provided in the die (18); and the kneader/extruder performs kneading and extrusion of the compound (6) intermittently. The kneader/extruder may include a scraper (20) that is provided on the shutter member (19) to scrape the compound (6) from a front surface of the die (18). In this manner, the kneader/extruder can generate an amount of a compound corresponding to one press and can be maintained easily.

## Description

### Technical Field

The present invention relates to a composite material press molding system and the configuration of a kneader/extruder which generates a fiber-reinforced plastic material (compound) as a raw material to be press-molded.

### Background Art

In recent years, a composite material press molding system has drawn attention because it can mold a large-sized fiber-reinforced plastic molded article efficiently. In the composite material press molding system, a reinforcement fiber and a plastic material are directly kneaded with each other on a line, and a compound generated thus is fed to a large-sized press molding machine so that the compound can be press-molded by the large-sized press molding machine. A molding method using this system is called DMC (Dough Molding Compound) molding method or BMC (Bulk Molding Compound) molding method. In the background art, in this system, an LFT-D (Long-Fiber Thermoplastics Direct) apparatus has been applied as a kneader/extruder which feeds the compound to the large-sized press molding machine (e.g. see Patent Literature 1).

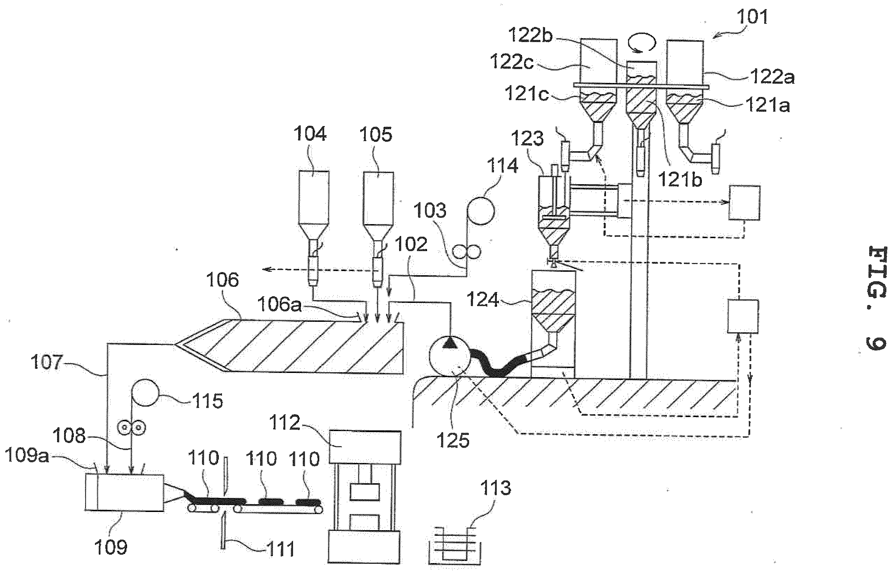

As shown in Fig. 9, the LFT-D apparatus is configured to include a premix generating portion 101, a first kneader/extruder 106, a second kneader/extruder 109, and a cutter 111. The premix generating portion 101 mixes various raw material plastics to generate a premix resin composition. The first kneader/extruder 106 kneads a reinforcement fiber 103, a filler 104 and a bulking agent 105 with the premix resin composition 102 fed from the premix generating portion 101, and extrudes a resulting intermediate compound 107. The second kneader/extruder 109 further adds a reinforcement fiber 108 to the intermediate compound 107 extruded from the first kneader/extruder 106, and extrudes a resulting finished compound 110. The cutter 111 cuts the finished compound 110 extruded from the second kneader/extruder 109 into a size suitable for the size of an article to be press-molded. Incidentally, the second kneader/extruder 109 is equipped if necessary, but may be dispensed with. In addition, in Fig. 9, the reference numeral 112 indicates a press device, and the reference numeral 113 indicates a fiber-reinforced plastic molded article.

The premix generating portion 101 includes a plurality of raw material tanks 122a, 122b and 122c, a mixing drum 123, a measuring tank 124, and a pump 125. Various raw material plastics 121a, 121b and 121c are stored in the plurality of raw material tanks 122a, 122b and 122c. The mixing drum 123 premixes the raw material plastics 121a, 121b and 121c fed from the raw material tanks 122a, 122b and 122c. The measuring tank 124 stores a fixed amount of the premix resin composition 102. The pump 125 feeds the premix resin composition 102 stored in the measuring tank 124 to the first kneader/extruder 106.

Endless continuous fibers wound around reels 114 and 115 respectively are used as the reinforcement fibers 103 and 108. The reinforcement fiber 103 led out of the reel 114 is fed continuously from its tip portion into the first kneader/extruder 106. In addition, the reinforcement fiber 108 led out of the reel 115 is fed continuously from its tip portion into the second kneader/extruder 109.

The first and second kneaders/extruders 106 and 109 house one or two screws rotatably respectively in heating cylinders provided with band heaters. The aforementioned various raw materials are fed into the heating cylinders from raw material feeding holes 106a and 109a provided on base end sides of the heating cylinders, and the raw materials are transferred to tip sides of the heating cylinders by feed functions of the screws. The raw materials which have been fed in the heating cylinders are kneaded in the transfer processes of the raw materials. In addition, plastic materials in the raw materials are plasticized by heat generated by the band heaters and shear heat and frictional heat generated due to the kneading of the raw materials. Thus, predetermined composition compounds 107 and 110 are generated. The reinforcement fibers 103 and 108 which have been fed in the first and second kneaders/extruders 106 and 109 are fractured upon reception of shearing forces or frictional forces caused by rotation of the screws. However, the LFT-D apparatus feeds the endless continuous fibers continuously into the first and second kneaders/extruders 106 and 109. Accordingly, a large amount of long fibers can be left in the finished compound 110 so that a high-strength fiber-reinforced plastic molded article 113 can be obtained.

### Citation List

### Patent Literature

Patent Literature 1: U.S. Unexamined Patent Application Publication No. 2010/0317769 A1

### Summary of Invention

### Technical Problem

However, in the configuration of the LFT-D apparatus according to Patent Literature 1, the finished compound 110 extruded continuously from the second kneader/extruder 109 is cut by the cuter 111 disposed in front of the second kneader/extruder 109 (on the press device 112 side). Therefore, the LFT-D apparatus has to include the cutter 111 which is large in size, high in strength, and sharp. That is, since the finished compound 110 extruded from the second kneader/extruder 109 suddenly decreases in temperature and increases in hardness, the large-sized and high-strength cutter 111 which is made sharp and driven by large motive power is required for cutting the finished compound 110. For this reason, a background-art compound feeding apparatus is high in equipment cost and wide in installation area. In addition thereto, considerable labor is required for maintenance of the cutter 111. Therefore, there is a problem that the compound feeding apparatus may have difficulty in enhancing production efficiency of a molded article sufficiently.

The invention has been accomplished in consideration of such an actual situation of the background art. An object of the invention is to provide a kneader/extruder which can generate an amount of a compound corresponding to one press for use in production of a fiber-reinforced plastic molded article without using a cutter so that the kneader/extruder can be maintained easily, and to provide a composite material press molding system which is provided with the kneader/extruder.

### Solution to Problem

In order to solve such a technical problem, the invention provides a kneader/extruder including: a heating cylinder that has a feed port for raw material plastic and a feed port for a bulking agent containing at least a reinforcement fiber; a screw that is housed in the heating cylinder so as to be capable of rotation and forward/backward movement; and a die that is attached to a tip of the heating cylinder; wherein: the kneader/extruder further includes: a shutter member that opens and closes a compound extrusion port provided in the die; and the kneader/extruder repeatedly performs an operation in which: in a state in which the shutter member has been closed, the screw is driven and rotated to knead the raw material plastic and the bulking agent with each other; whenever a predetermined amount of a compound is accumulated inside the heating cylinder, the shutter is opened and the screw is driven and moved forward to extrude the predetermined amount of the compound from the compound extrusion port to the outside; and the shutter is then closed to knead a next compound.

The kneader/extruder is provided with the shutter member that opens and closes the compound extrusion port. When the shutter member is opened and closed in order to alternately perform kneading of the compound and extrusion of the compound from the kneader/extruder, an amount of the compound corresponding to one press can be extruded from the kneader/extruder. Accordingly, a cutter for cutting the compound into pieces each corresponding to one press can be dispensed with, differently from the background-art technique. Accordingly, the size and cost of a compound feeding apparatus including the kneader/extruder can be reduced. In addition, maintenance of the cutter can be dispensed with so that operation efficiency of the composite material press molding system can be enhanced.

In addition, the invention provides a kneader/extruder having the aforementioned configuration, further including: a scraper that is provided on one side of the shutter member so that the compound extruded from the composite material extrusion port and having an amount corresponding to one press can be scraped from a tip portion of the die by the scraper.

The compound extruded from the die has viscosity and adheres to a front surface of the die. Accordingly, when the scraper is provided on the one side of the shutter member, the compound adhering to the front surface of the die can be scraped so that the amount of the compound corresponding to one press can be extracted accurately. In addition, since the compound adhering to the front surface of the die is scraped, the front surface of the die can be always kept clean, the die can be maintained easily, and production efficiency of a fiber-reinforced plastic molded article can be enhanced.

In addition, the invention provides a kneader/extruder having the aforementioned configuration, wherein: a heater is provided in the shutter member so that the shutter member can be heated by the heater.

When the shutter member is heated to a suitable temperature by the heater, the compound making contact with the shutter member can be prevented from being hardened due to a decrease in temperature of the compound. Accordingly, the compound can be scraped from the front surface of the die easily.

In addition, the invention provides a kneader/extruder having the aforementioned configuration, wherein: a heater is provided in the die so that the die can be heated by the heater.

When the die is heated to a suitable temperature by the heater, the compound accumulated in the die can be prevented from being hardened due to a decrease in temperature of the compound. Accordingly, the compound can be extruded from the die easily and smoothly.

In addition, the invention provides a kneader/extruder having the aforementioned configuration, wherein: the die is constituted by a fixed part that is firmly fixed to the heating cylinder directly or through another member, and a movable part that is attached to the fixed part removably; and the compound extrusion port is provided in the movable part.

Thus, the movable part in which the compound extrusion port is provided is attached to the fixed part removably. With this configuration, a suitable movable part different in the shape of the compound extrusion port can be selected so that the shape and size of the compound extruded from the die and having an amount corresponding to one press can be changed suitably in accordance with the shape and size of a fiber-reinforced plastic molded article to be produced. Accordingly, fiber-reinforced plastic molded articles having various shapes can be produced with high efficiency.

In addition, the invention provides a kneader/extruder having the aforementioned configuration, wherein: the die except a surface where the compound extrusion port is formed and an opposite surface to the surface is covered with a heat insulation plate.

When the die is covered with the heat insulation plate, heat can be suppressed from being released from the die wastefully. Accordingly, the compound accumulated inside the die can be held at a suitable temperature. In addition, when the die is heated by an electric heater, power saving of the electric heater can be attained.

On the other hand, the invention provides a composite material press molding system including: a raw material plastic feeding portion; a kneader/extruder that adds a bulking agent containing at least a reinforcement fiber to raw material plastic fed from the feeding portion, kneads the bulking agent with the raw material plastic, and extrudes a compound generated thus; and a press device that press-molds a predetermined amount of the compound fed from the kneader/extruder; wherein: a device that includes a heating cylinder, a screw housed in the heating cylinder so as to be capable of rotating and forward/backward movement, a die disposed at a tip of the heating cylinder, and a shutter member opening and closing a compound extrusion port provided in the die is used as the kneader/extruder; and the kneader/extruder repeatedly performs an operation in which: in a state in which the shutter member has been closed, the screw is driven and rotated to knead the raw material plastic and the bulking agent with each other; whenever the predetermined amount of the compound is accumulated inside the heating cylinder, the shutter is opened and the screw is driven and moved forward to extrude the predetermined amount of the compound from the compound extrusion port to the outside; and the shutter is then closed to knead a next compound.

The kneader/extruder is provided with the shutter member that opens and closes the compound extrusion port. When the shutter member is opened and closed in order to perform kneading of the compound and extrusion of the compound from the kneader/extruder alternately, an amount of the compound corresponding to one press can be extruded from the kneader/extruder. Accordingly, a cutter for cutting the compound into pieces each corresponding to one press can be dispensed with, differently from the background-art technique. Accordingly, the configuration of the composite material press molding system can be simplified, and the size and cost of the composite material press molding system can be reduced. In addition, maintenance of the cutter can be dispensed with, and production efficiency of a fiber-reinforced plastic molded article can be enhanced.

### Advantageous Effects of Invention

According to the invention, the kneader/extruder is provided with the shutter member that opens and closes the compound extrusion port so that the amount of the compound corresponding to one press can be extruded from the kneader/extruder. With this configuration, a cutter for cutting the compound into pieces each corresponding to one press can be dispensed with. Accordingly, the size and cost of the apparatus can be reduced, and production efficiency of a fiber-reinforced plastic molded article can be improved. Brief Description of Drawings

[Fig. 1] A view of the configuration of a composite material press molding system according to an embodiment.
[Fig. 2] A side view of a kneader/extruder according to the embodiment.
[Fig. 3] A plan view of a screw driving mechanism provided in the kneader/extruder according to the embodiment.
[Fig. 4] A side view of the screw driving mechanism provided in the kneader/extruder according to the embodiment.
[Fig. 5] A main part perspective view of the kneader/extruder according to the embodiment as seen from front.
[Fig. 6] A main part sectional view of a shutter closed state of the kneader/extruder according to the embodiment.
[Fig. 7] A main part sectional view of a shutter opened state of the kneader/extruder according to the embodiment.
[Fig. 8] A diagram showing an operation sequence of the kneader/extruder according to the embodiment.
[Fig. 9] A view of the configuration of a composite material press molding system which has been known in the background art.

### Description of Embodiment

An embodiment as to a composite material press molding system and a kneader/extruder provided in the composite material press molding system according to the invention will be described below.

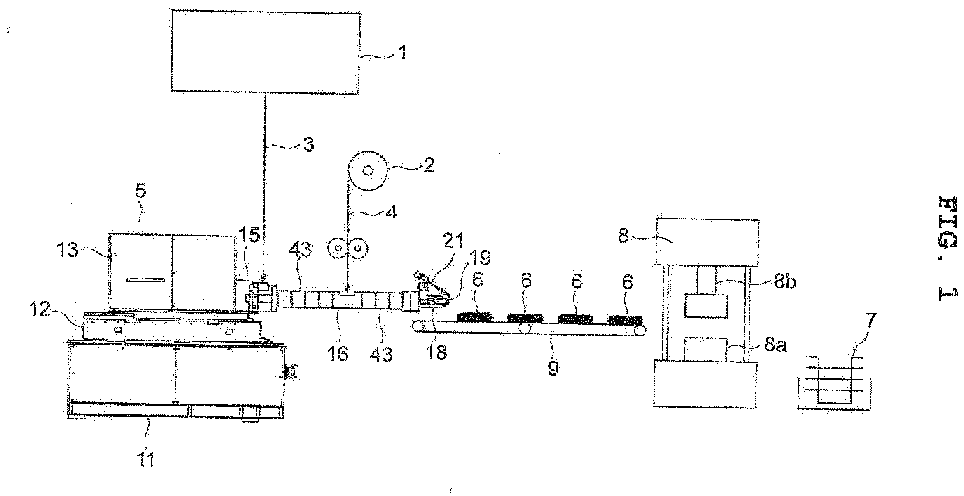

As shown in Fig. 1, the composite material press molding system according to the embodiment is provided with a premix generating portion 1, a reel 2, a kneader/extruder 5, a press device 8, and a conveyor device 9. The kneader/extruder 5 kneads a reinforcement fiber 4 with a premix resin composition 3, and extrudes a resulting compound 6. The premix resin composition 3 is fed from the premix generating portion 1. The reinforcement fiber 4 is led out of the reel 2. The press device 8 press-molds the compound 6 extruded from the kneader/extruder 5 and having an amount corresponding to one press, and produces a required fiber-reinforced plastic molded article 7. The conveyor device 9 transfers the compound 6 extruded from the kneader/extruder 5, up to the press device 8. Incidentally, it is a matter of course that the aforementioned composite material press molding system may be provided with another device such as a device for feeding a filler and a bulking agent if necessary.

The same portion as the premix generating portion 101 (see Fig. 9) according to Patent Literature 1 can be provided as the premix generating portion 1. In addition, the premix generating portion 1 may be replaced by a portion which can directly feed pellet-type, flake-type or powder-type raw material plastic stored in a hopper into the kneader/extruder 5. Thus, the premix generating portion 1 can be adapted suitably in accordance with the kind of the compound 6 applied to production of the fiber-reinforced plastic molded article 7.

Any thermoplastic resin and any thermosetting resin belonging to public knowledge can be used as the premix resin composition 3 or the raw material plastic to be fed to the kneader/extruder 5. In addition, glass fibers, carbon fibers, synthetic fibers, metal fibers, organic fibers, and natural fibers can be used as the reinforcement fiber 4. Incidentally, when the glass fibers or the carbon fibers are used, a strand formed out of several hundred of filaments bundled by a binder can be used. In addition, a roving in which several strands to several tens of strands are arranged in parallel and wound around a reel may be used.

When the amount of the compound 6 corresponding to one press is transferred from the kneader/extruder 5 to the press device 8 through the conveyer device 9, the press device 8 puts the amount of the compound 6 between a fixed mold 8a and a movable mold 8b, presses the movable mold 8b against the fixed mold 8a by oil pressure etc., and produces the required fiber-reinforced plastic molded article 7. The press device 8 is a matter belonging to public knowledge and not the gist of the invention. Therefore, the press device 8 will not be described any further.

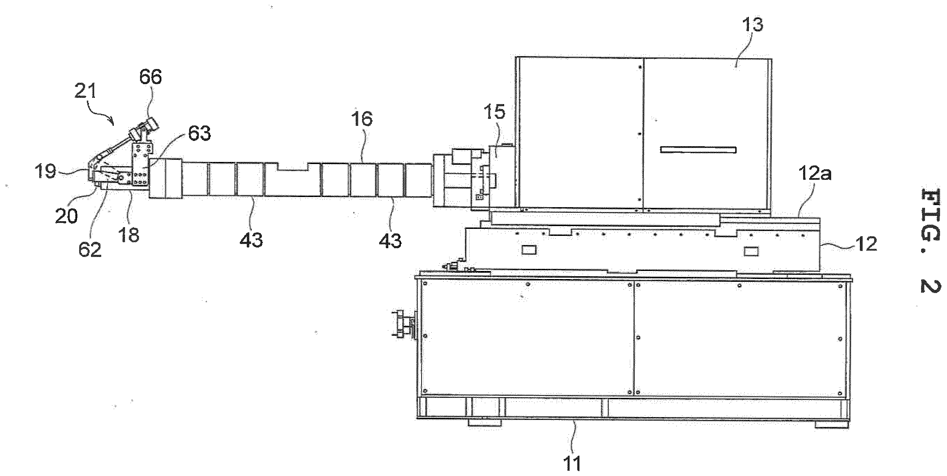

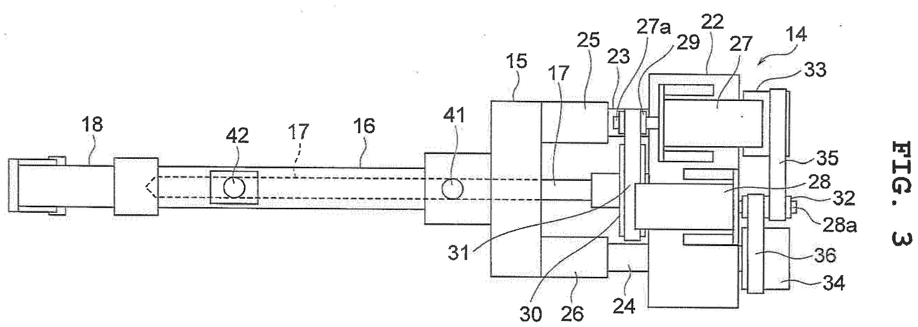

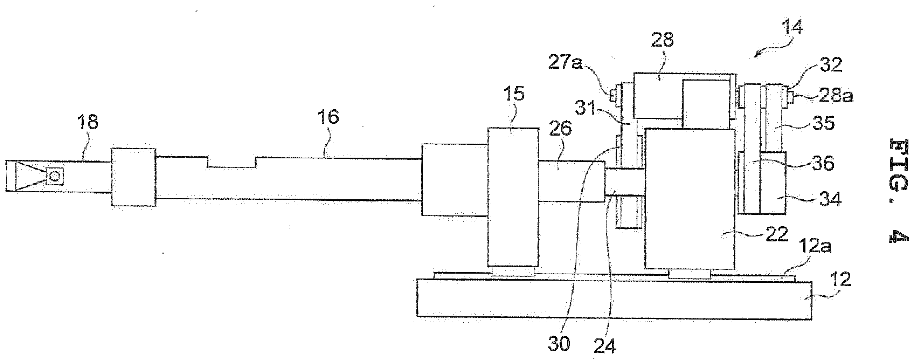

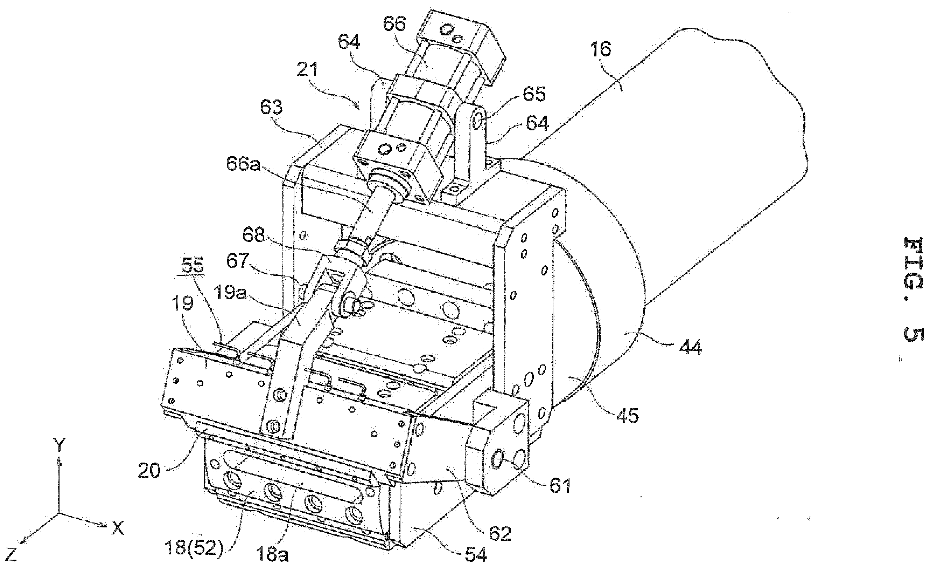

As shown in Figs. 2 to 7, the kneader/extruder 5 is provided with a box-like frame 11, a base board 12, a box-like cover case 13, and a screw driving mechanism 14. A control device, a power supply device and an air compressor etc. which are not shown are housed in the frame 11. The base board 12 is fixed on the frame 11. The cover case 13 is placed on the base board 12. The screw driving mechanism 14 is housed in the cover case 13. As shown in Figs. 1 and 4, the screw driving mechanism 14 is attached to guide rails 12a provided on an upper surface of the base board 12. The screw driving mechanism 14 is configured to include a heating cylinder attachment plate 15. A heating cylinder 16 is fixed to the heating cylinder attachment plate 15. As shown in Fig. 3, a screw 17 driven by the screw driving mechanism 14 is housed in the heating cylinder 16 so as to be capable of rotation and forward/backward movement. Further, as shown in Fig. 5, a die 18, a shutter member 19, a scraper 20 and a shutter driving mechanism 21 are provided in a tip portion of the heating cylinder 16. The die 18 has a compound extrusion port 18a. The shutter member 19 is disposed on a front surface side of the die 18 to open and close the compound extrusion port 18a. The scraper 20 scrapes the compound 6 adhering to the front surface of the die 18. The shutter driving mechanism 21 drives the shutter member 19 and the scraper 20.

As shown in Figs. 3 and 4, the screw driving mechanism 14 has the heating cylinder attachment plate 15 and a moving plate 22 disposed to be opposed to the heating cylinder attachment plate 15. The heating cylinder attachment plate 15 is fixed to the guide rails 12a movably. On the other hand, the moving plate 22 is attached to the guide rails 12a movably so that the moving plate 22 can move in a direction approaching the heating cylinder attachment plate 15 and a direction leaving the heating cylinder attachment plate 15. Two screw shafts 23 and 24 are retained at a predetermined interval from each other in the width direction of the moving plate 22 rotatably. Nut bodies 25 and 26 engaging with the screw shafts 23 and 24 are firmly fixed to the heating cylinder attachment plate 15. The screw shafts 23 and 24 and the nut bodies 25 and 26 form two sets of ball screw mechanisms. Further, a screw rotating motor 27 and a screw forward/backward moving motor 28 are attached to an upper surface of the moving plate 22. A first pulley 29 is firmly fixed to a rotational shaft 27a of the screw rotating motor 27. A second pulley 30 is firmly fixed to the screw 17. A first timing belt 31 is wound around the first and second pulleys 29 and 30. In addition, a third pulley 32 is firmly fixed to a rotational shaft 28a of the screw forward/backward moving motor 28, and fourth and fifth pulleys 33 and 34 are firmly fixed to the screw shafts 23 and 24, respectively. A second timing belt 35 is wound around the third pulley 32 and the fourth pulley 33, and a third timing belt 36 is wound around the third pulley 32 and the fifth pulley 34.

Accordingly, when the screw rotating motor 27 is driven and rotated, a rotational force of the screw rotating motor 27 is transmitted to the screw 17 through the first pulley 29, the first timing belt 31 and the second pulley 30 so that the screw 17 can be driven and rotated inside the heating cylinder 16. In addition, when the screw forward/backward moving motor 28 is driven and rotated, a rotational force of the screw forward/backward moving motor 28 is transmitted to the first screw shaft 23 through the third pulley 32, the second timing belt 35 and the fourth pulley 33 and transmitted to the second screw shaft 24 through the third pulley 32, the third timing belt 36, and the fifth pulley 34. Thus, due to the first and second screw shafts 23 and 24 screwed into the first and second nut bodies 25 and 26, the moving plate 22 can move forward in the direction approaching the heating cylinder attachment plate 15.

The heating cylinder 16 is formed into a cylindrical shape in which the screw 17 can be housed so as to be capable of rotation and forward/backward movement. As shown in Fig. 3, a feed hole 41 for the premix resin composition 2 (raw material plastic) fed from the premix generating portion 1 is provided in a base end side of the heating cylinder 16, and a feed hole 42 for the reinforcement fiber 4 is provided in a lengthwise intermediate position of the heating cylinder 16. Further, a plurality of band heaters 43 for heating the raw material and the compound inside the heating cylinder 16 to a suitable temperature are wound around an outer circumference of the heating cylinder 16, as shown in Fig. 2. Incidentally, a screw insertion hole formed in the heating cylinder 16 is formed into a circular shape in section.

The screw 17 is a rod-like member which has flights (screw threads) formed at its outer surface. Accordingly, when the screw 17 is driven and rotated inside the heating cylinder 16, the premix resin composition 2 and the reinforcement fiber 4 which have been fed into the heating cylinder 16 from the feed holes 41 and 42 are transferred to the tip side of the heating cylinder 16 by a feed function of the flights. The various materials which have been fed into the heating cylinder 16 are kneaded in the transfer process of the materials, and the premix resin component 2 is plasticized by heat generated by the band heaters 43 and shear heat and frictional heat generated due to the kneading of the materials. Thus, a predetermined compound 6 is generated. The kneader/extruder 5 according to the embodiment also feeds an endless continuous fiber as the reinforcement fiber 4 into the heating cylinder 16, similarly to the LFT-D apparatus according to the background-art example. Accordingly, a large amount of long fibers can be left in the compound 6 so that a high-strength fiber-reinforced plastic molded article 7 can be obtained. In addition, when the screw 17 is driven and moved forward inside the heating cylinder 16, the compound 6 can be extruded from the compound extrusion port 18a.

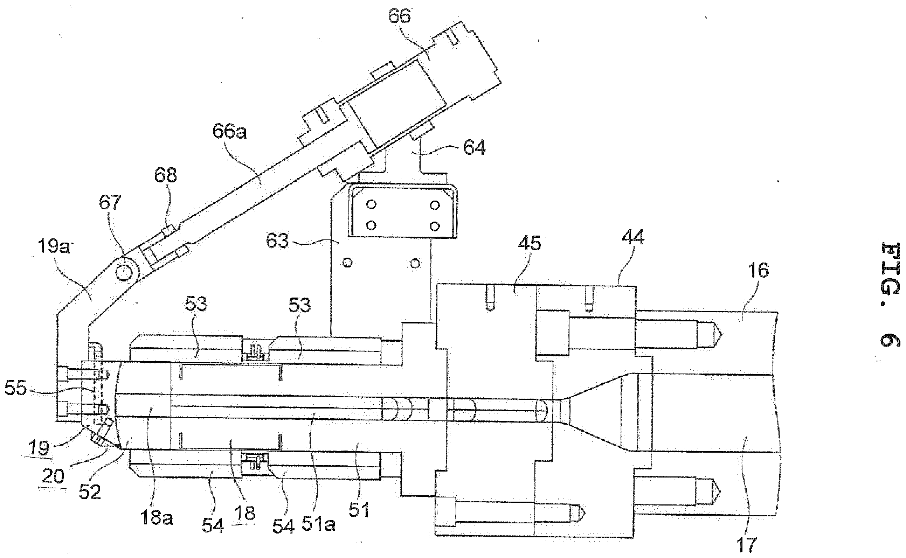

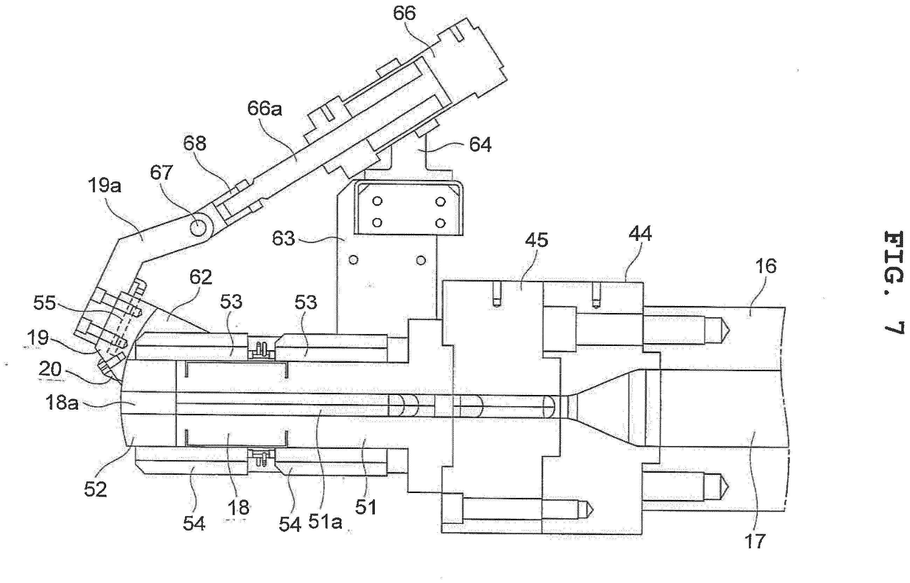

As shown in Figs. 6 and 7, the die 18 is attached to the tip portion of the heating cylinder 16 through a cylinder head 44 and a relay block 45. The die 18 includes a fixed part 51 and a movable part 52. The fixed part 51 is attached to the relay block 45. The movable part 52 is attached to the fixed part 51 removably. As shown in Fig. 5, the compound extrusion port 18a shaped like an oval is provided in the movable part 52. In addition, a compound circulation hole 51a is provided in the fixed part 51. The compound circulation hole 51a has a circular shape on the heating cylinder 16 side to communicate with the screw insertion hole, and an oval shape on the movable part 52 side to communicate with the compound extrusion port 18a. When the die 18 is constituted by the fixed part 51 and the movable part 52 in this manner, a suitable movable part different in the shape of the compound extrusion port 18a can be selected so that the shape and size of the compound 6 extruded from the die 18 and having an amount corresponding to one press can be changed suitably in accordance with the shape and size of a fiber-reinforced plastic molded article to be produced. Accordingly, press molding of the fiber-reinforced plastic molded article 7 by the press device 8 can be optimized. In addition, deburring work can be reduced or dispensed with so that production efficiency of the fiber-reinforced plastic molded article 7 can be enhanced. Incidentally, a front surface of the movable part 52 is formed into an arc shape, as shown in Figs. 6 and 7.

Cartridge heaters 53 for heating the compound accumulated inside the compound circulation hole 51a to a suitable temperature are placed around the die 18 except the front surface of the movable part 52 and a rear surface of the fixed part 51 opposed thereto. The cartridge heaters 53 are covered with heat insulation plates 54. When the cartridge heaters 53 are placed around the die 18 in this manner, the compound accumulated inside the compound circulation hole 51a can be prevented from being hardened. Accordingly, the compound 6 can be extruded from the die 18 easily and smoothly. In addition, when the cartridge heaters 53 are covered with the heat insulation plates 54, heat can be suppressed from being released wastefully from the die 18. Accordingly, the compound 6 which has been accumulated inside the die 18 can be held at a suitable temperature, and power saving of the cartridge heaters 53 can be attained.

As shown in Fig. 5, the shutter member 19 is formed into a rectangular shape to have a shape and an area large enough to cover the front surface of the movable part 52. An inner surface of the shutter member 19 is formed into an arc shape to be fitted to the front surface of the movable part 52. In addition, a coupling piece 19a coupled to an air cylinder 66 which will be described later is provided on a central portion of an outer surface of the shutter member 19. As shown in Figs. 6 and 7, shutter heating heaters 55 are inserted into the shutter member 19. When the heaters 55 are inserted into the shutter member 19 in this manner, the shutter member 19 and the scraper 20 can be heated to a suitable temperature by the heaters 55. Accordingly, the compound making contact with the shutter member 19 can be prevented from being hardened due to a decrease in temperature of the compound so that the compound can be scraped easily from the front surface of the die 18. Since the inner surface of the shutter member 19 is disposed in a position making contact with the front surface of the movable part 52, the shutter member 19 can be rotated in an up/down direction along the front surface of the movable part 52.

On the other hand, the scraper 20 is formed into a square rod shape longer than the width of the movable part 52. The scraper 20 is attached to a lower side of the shutter member 19. A lower side portion of the scraper 20 is formed into an edge shape to thereby make it easy to scrape the compound 6 adhering to the front surface of the movable part 52. Since the lower side of the scraper 20 is disposed in the position making contact with the front surface of the movable part 52, the scraper 20 can be rotated in the up/down direction along the front surface of the movable part 52. When the scraper 20 is provided on one side of the shutter member 19 in this manner, the scraper 20 can easily scrape the compound adhering to the front surface of the movable part 52. Accordingly, it is possible to accurately extract an amount of the compound 6 corresponding to one press. In addition, since the compound 6 adhering to the front surface of the movable part 52 can be scraped, the movable part 52 can be maintained easily, and production efficiency of the fiber-reinforced plastic molded article can be enhanced.

As shown in Figs. 5 to 7, the shutter driving mechanism 21 includes arm members 62, a downward-opened U-shaped stand member 63, two support members 64, the air cylinder 66, and a coupling member 68. The shutter member 19 and the scraper 20 are attached to one tips of the arm members 62. The other ends of the arm members 62 are rotatably pivoted around lateral portions of the die 18 through coupling pins 61. Tips of the stand member 63 are firmly fixed to side surface portions of the die 18. The two support members 64 rise in parallel on an upper surface of the stand member 63. The air cylinder 66 is rotatably attached to the support members 64 through coupling pins 65. The coupling member 68 rotatably couples a piston rod 66a of the air cylinder 66 and the coupling piece 19a to each other through coupling pins 67. The coupling piece 19a is provided in the shutter member 19. Incidentally, the stand member 63 may be attached to face the lower side of the die 18. In addition, the configuration in which the piston rod 66a of the air cylinder 66 is coupled to the shutter member 19 may be replaced by a configuration in which the piston rod 66a of the air cylinder 66 is coupled to the arm members 62. Although the shutter driving mechanism 21 in this example is provided with the air cylinder 66 as a drive source for the shutter member 19 and the scraper 20, a hydraulic drive source or an electric drive source may be used.

In a state in which the air cylinder 66 has been extended, the shutter member 19 is rotated to a position opposed to the front surface of the movable part 52 so that the compound extrusion port 18a can be closed by the shutter member 19, as shown in Fig. 6. In this state, the compound extrusion port 18a is closed by the shutter member 19. Accordingly, the compound 6 can be prevented from being extruded from the compound extrusion port 18a even when the screw 16 is driven and rotated. Thus, the compound 6 can be kneaded and measured. When the air cylinder 66 is changed over from the extended state to a contracted state, the arm members 62 are rotated around the coupling pins 61. As a result, the shutter member 19 and the scraper 20 are moved upward so that the compound extrusion port 18a can be opened, as shown in Fig. 7. Accordingly, the compound 6 can be extruded from the compound extrusion port 18a.

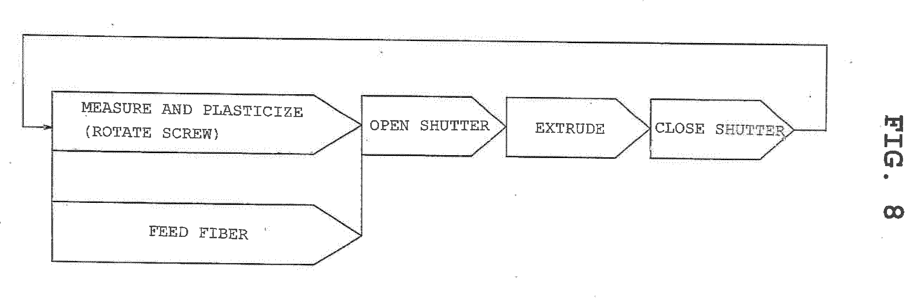

As shown in Fig. 8, the kneader/extruder 5 according to the embodiment performs, in order: closing of the compound extrusion port 18a by the shutter member 19; plasticization, kneading and measurement of the compound 6 including the premix resin compound 2 and the reinforcement resin 4; opening of the shutter 19; extrusion of the compound 6 from the compound extrusion port 18a; and closing of the compound extrusion port 18a by the shutter member 19. The shutter member 19 is opened and closed by contraction and extension of the air cylinder 66. In addition, in order to plasticize and knead the compound, the screw 17 is driven and rotated by the screw rotating motor 27 in the same manner as in an in-line type injection molding machine. In order to measure the compound, the screw 17 is retracted to a setting position by pressure of the compound sent to the front of the screw 17. Further, in order to extrude the compound 6, the screw 6 is driven and moved forward by the screw forward/backward moving motor 28. Drive control of the screw rotating motor 27 and the screw forward/backward moving motor 28, and electric conduction control of the band heaters 43, the cartridge heaters 53 and the shutter heating heaters 55 are performed by the not-shown control device provided in the frame 11.

The kneader/extruder 5 according to the embodiment is provided with the shutter member 19 which opens and closes the compound extrusion port 18a provided in the die 18. When the shutter member 19 is opened and closed in order to perform kneading of the compound 6 and extrusion of the compound 6 from the kneader/extruder 5 alternately, an amount of the compound 6 corresponding to one press can be extruded. Accordingly, a cutter for cutting the compound into pieces each corresponding to one press can be dispensed with, differently from a case where a compound is extruded continuously from a kneader/extruder. The size and cost of a compound feeding apparatus provided in the composite material press molding system can be reduced. In addition, since the cutter can be dispensed with, the compound feeding apparatus can be maintained easily, and production efficiency of the fiber-reinforced plastic molded article 7 can be enhanced.

Although the aforementioned embodiment has been described in the case where a thermoplastic resin is used as the raw material plastic of the compound by way of example, the embodiment can be carried out similarly also when a thermosetting resin is used. In addition, although the aforementioned embodiment has been described in the case where the reinforcement resin is fed continuously to thereby generate the compound by way of example, chopped fibers (cut fibers) may be used alternatively to thereby generate a compound.

### Industrial Applicability

The invention can be applied to production of a fiber-reinforced plastic molded article. Reference Signs List

- 1: premix generating portion
- 2: reel
- 3: premix resin composition or raw material plastic
- 4: reinforcement resin
- 5: kneader/extruder
- 6: compound
- 7: fiber-reinforced plastic molded article
- 8: press device
- 9: conveyor
- 11: frame
- 14: screw driving mechanism
- 16: heating cylinder
- 17: screw
- 18: die
- 18a: compound extrusion port
- 19: shutter member
- 20: scraper
- 21: shutter driving mechanism
- 27: screw rotating motor
- 28: screw forward/backward moving motor
- 43: band heater
- 53: cartridge heater
- 55: shutter heating heater
- 62: arm member
- 66: air cylinder

## Claims

1. A kneader/extruder comprising: a heating cylinder that has a feed port for raw material plastic and a feed port for a bulking agent containing at least a reinforcement fiber; a screw that is housed in the heating cylinder so as to be capable of rotation and forward/backward movement; and a die that is attached to a tip of the heating cylinder; wherein:
the kneader/extruder further comprises: a shutter member that opens and closes a compound extrusion port provided in the die; and
the kneader/extruder repeatedly performs an operation in which: in a state in which the shutter member has been closed, the screw is driven and rotated to knead the raw material plastic and the bulking agent with each other; whenever a predetermined amount of a compound is accumulated inside the heating cylinder, the shutter is opened and the screw is driven and moved forward to extrude the predetermined amount of the compound from the compound extrusion port to the outside; and the shutter is then closed to knead a next compound.

2. A kneader/extruder according to Claim 1, further comprising:
a scraper that is provided on one side of the shutter member so that an end portion of the compound extruded from the composite material extrusion port can be scraped from a tip portion of the die by the scraper.

3. A kneader/extruder according to Claim 1, wherein:
a heater is provided in the shutter member so that the shutter member can be heated by the heater.

4. A kneader/extruder according to Claim 1, wherein:
a heater is provided in the die so that the die can be heated by the heater.

5. A kneader/extruder according to Claim 1, wherein:
the die is constituted by a fixed part that is firmly fixed to the heating cylinder directly or through another member, and a movable part that is attached to the fixed part removably; and the composite material extrusion port is provided in the movable part.

6. A kneader/extruder according to Claim 1, wherein:
the die except a surface where the composite material extrusion port is formed and an opposite surface to the surface is covered with a heat insulation plate.

7. A kneader/extruder according to Claim 2, wherein:
a heater is provided in the shutter member so that the shutter member can be heated by the heater.

8. A kneader/extruder according to Claim 2, wherein:
a heater is provided in the die so that the die can be heated by the heater.

9. A kneader/extruder according to Claim 2, wherein:
the die is constituted by a fixed part that is firmly fixed to the heating cylinder directly or through another member, and a movable part that is attached to the fixed part removably; and the composite material extrusion port is provided in the movable part.

10. A kneader/extruder according to Claim 2, wherein:
the die except a surface where the composite material extrusion port is formed and an opposite surface to the surface is covered with a heat insulation plate.

11. A kneader/extruder according to Claim 7, wherein:
a heater is provided in the die so that the die can be heated by the heater.

12. A kneader/extruder according to Claim 7, wherein:
the die is constituted by a fixed part that is firmly fixed to the heating cylinder directly or through another member, and a movable part that is attached to the fixed part removably; and the composite material extrusion port is provided in the movable part.

13. A kneader/extruder according to Claim 7, wherein:
the die except a surface where the composite material extrusion port is formed and an opposite surface to the surface is covered with a heat insulation plate.

14. A kneader/extruder according to Claim 7, wherein:
the die is constituted by a fixed part that is firmly fixed to the heating cylinder directly or through another member, and a movable part that is attached to the fixed part removably; and the composite material extrusion port is provided in the movable part.

15. A kneader/extruder according to Claim 7, wherein:
the die except a surface where the composite material extrusion port is formed and an opposite surface to the surface is covered with a heat insulation plate.

16. A kneader/extruder according to Claim 14, wherein:
the die except a surface where the composite material extrusion port is formed and an opposite surface to the surface is covered with a heat insulation plate.

17. A composite material press molding system comprising: a raw material plastic feeding portion; a kneader/extruder that adds a bulking agent containing at least a reinforcement fiber to raw material plastic fed from the feeding portion, kneads the bulking agent with the raw material plastic, and extrudes a compound generated thus; and a press device that press-molds a predetermined amount of the compound fed from the kneader/extruder; wherein:
a device that includes a heating cylinder, a screw housed in the heating cylinder so as to be capable of rotation and forward/backward movement, a die disposed at a tip of the heating cylinder, and a shutter member opening and closing a compound extrusion port provided in the die is used as the kneader/extruder; and
the kneader/extruder repeatedly performs an operation in which: in a state in which the shutter member has been closed, the screw is driven and rotated to knead the raw material plastic and the bulking agent with each other; whenever a predetermined amount of a compound is accumulated inside the heating cylinder, the shutter is opened and the screw is driven and moved forward to extrude the predetermined amount of the compound from the compound extrusion port to the outside; and the shutter is then closed to knead a next compound.
